# FASCICULE DE BREVET EUROPEEN

(11) **EP 3 233 712 B1**
(45) Date de publication et mention de la délivrance du brevet: **17.04.2019**
(21) Numéro de dépôt: 15821137.5
(22) Date de dépôt: 15.12.2015
(51) Int. Cl.: B66F 9/075, E02F 9/16, B60R 21/11

(54) **DISPOSITIF DE PROTECTION CONTRE LA CHUTE D'OBJETS**
VORRICHTUNG ZUM SCHUTZ VOR HERAB FALLENDEN GEGENSTÄNDEN
DEVICE FOR PROTECTION AGAINST DROPING OBJECTS

(30) Priorité: 15.12.2014 FR 1462396
(43) Date de publication de la demande: 25.10.2017
(73) Titulaire: MANITOU BF, 44150 Ancenis (FR)
(72) Inventeur: CHAMPION, Philippe, 44370 Montrelais (FR)
(74) Mandataire: Godineau, Valérie
(86) Numéro de dépôt international: PCT/FR2015/053529
(87) Numéro de publication internationale: WO 2016/097594

(56) Documents cités:
- DE-U1- 8 902 041
- JP-A- 2013 159 909
- JP-A- 2014 105 455
- JP-A- 2014 114 661
- JP-U- S6 216 059
- JP-U- H04 123 853
- US-A- 2 806 618
- US-A- 4 153 262
- US-A1- 2014 292 032

## Description

L'invention est relative à un dispositif de protection contre la chute d'objets ainsi qu'à une cabine de conducteur comprenant ce dispositif.

L'invention est particulièrement utile pour la protection d'un toit de cabine de conducteur, notamment de cabine de conducteur d'engin de manutention.

Le document US 4 153 262 décrit un cadre de protection pour conducteur de chariot à fourches. Le cadre comporte une pluralité de lames disposées sous le même angle. La visibilité du conducteur est possible par les interstices des lames vers l'avant. Cependant, la visibilité du conducteur est entravée vers l'arrière en raison de la position des lames constituant le dispositif de protection.

Le document DE 89 020 41 U décrit un cadre ou toit de protection pour conducteur de chariot à fourches, offrant au conducteur une vue dégagée vers le haut à travers le toit de protection pour toutes les inclinaisons ou toutes les positions de la tête du conducteur. Le cadre de protection porte une pluralité de lames permettant une visibilité améliorée du conducteur à travers le toit. Certaines lames à l'avant du cadre de protection sont inclinées selon un angle aigu par rapport au plan vertical. Cet angle incliné diminue progressivement en direction de la verticale de la tête du conducteur.

Les lames inclinées situées derrière la tête du conducteur forment un angle obtus avec le plan vertical. L'angle obtus augmente progressivement vers l'arrière du toit de protection.

Le document JP H04 123853 U divulgue un dispositif de protection contre la chute d'objets, notamment pour protéger un toit de cabine de conducteur, le dispositif comportant une pluralité de lames inclinées pour offrir une bonne visibilité au conducteur, ledit dispositif comportant au moins un longeron central auquel chaque lame inclinée est solidarisée de part et d'autre de ce au moins un longeron central. Par ailleurs, le document JP 2014 114661 divulgue également un dispositif de protection ayant les mêmes caractéristiques techniques que JP H04 123853 U.

Un premier but de l'invention est de perfectionner l'état de la technique connue, en proposant un nouveau dispositif de protection contre la chute d'objets, de structure améliorée et apte à résister plus efficacement aux chutes d'objets.

Un deuxième but de l'invention est de proposer un nouveau dispositif de protection évitant les éblouissements du conducteur, et en particulier les éblouissements par des reflets sur l'écran de contrôle du poste de conduite.

L'invention a pour objet un dispositif de protection contre la chute d'objets pour protéger un toit de cabine de conducteur, le dispositif comportant une pluralité de lames inclinées pour offrir une bonne visibilité au conducteur, et au moins un longeron central auquel chaque lame inclinée est solidarisée de part et d'autre dudit au moins un longeron central, caractérisé en ce que chaque lame inclinée présente une structure qui s'élargit en direction de sa partie centrale et qui présente une largeur maximale au droit de la jonction entre ladite partie centrale et ledit au moins un longeron central.

Selon d'autres caractéristiques alternatives de l'invention :
- le dispositif comporte deux longerons latéraux de transmission des efforts à la structure de la cabine ;
- chaque lame inclinée est solidarisée à chaque longeron latéral, par exemple, de part et d'autre de ce longeron latéral ;
- chaque lame inclinée est avantageusement conformée pour présenter un moment quadratique résistant à la chute d'objets, sensiblement voisin du moment quadratique résistant à la chute d'objets des autres lames ;
- la hauteur de chaque lame est dimensionnée pour occulter la lumière solaire venant de l'arrière en direction de l'intérieur de la cabine, de manière à éviter la surchauffe de la cabine et l'éblouissement du conducteur par des reflets sur le tableau ou la planche de bord de la cabine ;
- les lames inclinées peuvent être conformées pour présenter une inclinaison réglable par le conducteur de la cabine ;
- les lames inclinées sont conformées pour présenter une inclinaison asservie à la position et à la hauteur du siège du conducteur ;
- les lames inclinées peuvent présenter une conformation en faucille ;
- chaque lame inclinée peut être essentiellement de section constante.

L'invention a également pour objet une cabine de conducteur d'un engin de manutention comprenant un toit, caractérisé en ce que la cabine comprend un dispositif de protection du toit tel que brièvement exposé ci-dessus.

L'invention sera mieux comprise grâce à la description qui va suivre donnée à titre d'exemple non limitatif, en référence aux dessins annexés dans lesquels :
La figure 1 représente schématiquement une vue en perspective d'un premier mode de réalisation de l'invention.
La figure 2 représente schématiquement une vue en perspective d'un deuxième mode de réalisation de l'invention.
La figure 3a représente schématiquement une vue en perspective de la cabine vue de l'arrière de l'engin de manutention (non représenté).
La figure 3b représente schématiquement une vue en perspective de la cabine vue de l'avant de l'engin de manutention (non représenté).

Les structures de protection contre les chutes d'objets sont généralement des assemblages de membrures disposés de façon à protéger l'opérateur contre les chutes d'objet. Cette protection doit être effective, dans le sens que le volume limite de déformation défini par la norme ne peut être pénétré par aucune partie de la structure de protection après déformation.

Le volume limite de déformation est défini par la norme ISO 3449 et correspond approximativement au volume occupé par un opérateur de grande taille portant des vêtements normaux et un casque de protection.

Deux niveaux de protection contre les chutes d'objets sont définis.

Un premier niveau de protection est relatif à la protection contre les chutes d'objets de petite taille tels que : briques, petit blocs de béton, outils à main. Ces chutes d'objets de petite taille peuvent survenir lors d'opérations courantes telles que : travaux de voirie, aménagement paysager ou travaux de chantier de construction.

Un deuxième niveau de protection est relatif à la protection contre les chutes d'objets lourds, notamment des arbres ou des rochers. Ces chutes d'objets lourds peuvent survenir lors de travaux importants tels que : déblaiements de chantier, démolitions en hauteur ou travaux forestiers.

Le premier niveau de protection a été normalisé et défini comme devant satisfaire à des essais de chute d'un objet à embout sphérique correspondant à une énergie de chute de 1 365 joules.

Le deuxième niveau de protection est également normalisé et défini comme devant satisfaire à des essais de chute d'un objet cylindrique produisant une énergie de chute de 11 600 joules.

Les exigences dimensionnelles de la structure de protection contre la chute d'objets sont de couvrir et de chevaucher complètement la projection verticale du volume limite de déformation, étant précisé que le volume limite de déformation ne peut en aucun cas être pénétré par une partie de la structure de protection après déformation due à un impact par l'objet d'essai.

La structure de protection contre la chute d'objets doit également empêcher la pénétration de l'objet d'essai dans le volume limite de déformation pour réussir aux essais normalisés.

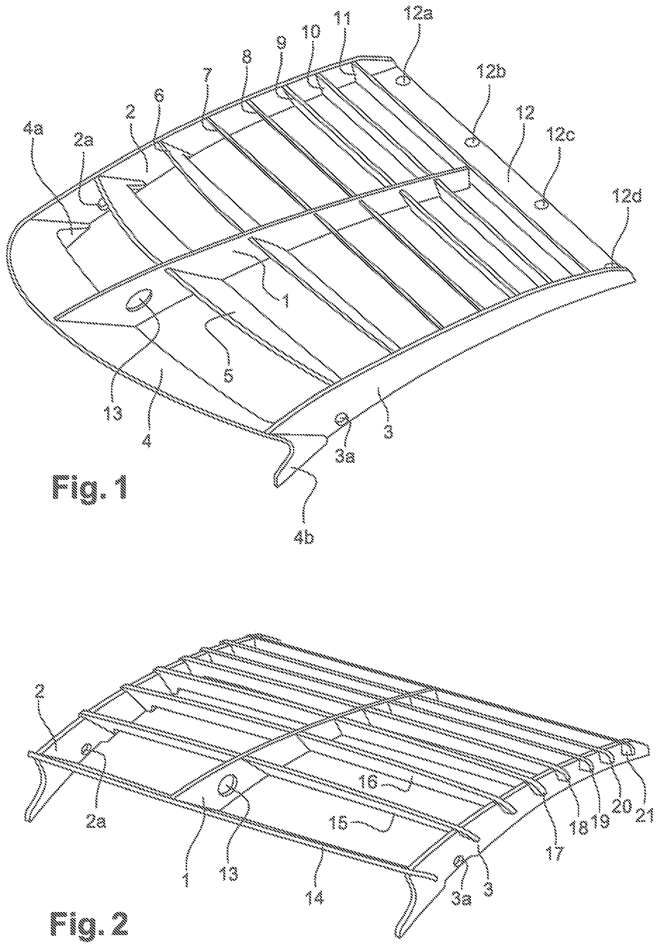

Sur la figure 1, un premier mode de réalisation de dispositif de protection contre la chute d'objets comporte au moins un longeron central 1 et deux longerons latéraux 2 et 3.

Des lames 4, 5, 6, 7, 8, 9, 10, 11, ou membrures de protection sont solidarisées au longeron central, de manière à réaliser une structure monobloc.

Chaque lame s'étend perpendiculairement au longeron central depuis une première extrémité fixée à un longeron latéral jusqu'à une deuxième extrémité opposée fixée à l'autre longeron latéral. Les lames sont rectilignes selon leur extension longitudinale (suivant une vue de dessus de chaque lame).

Dans ce mode de réalisation, chaque lame 5 à 10 traverse ainsi le longeron central dans son épaisseur, à travers une fente pratiquée dans l'épaisseur du longeron et sur une partie de sa hauteur.

Ces lames 4, 5, 6, 7, 8, 9, 10, 11 de protection sont conformées pour présenter un moment quadratique dans le sens vertical sensiblement voisin ou égal à celui des autres lames 4, 5, 6, 7, 8, 9, 10, 11.

Ainsi, la chute localisée d'un objet sur une lame rencontre sensiblement la même résistance mécanique dans le sens vertical, quelle que soit la lame 4 à 11 du dispositif de protection selon l'invention.

Le longeron central 1 présente une hauteur s'élargissant de l'arrière vers l'avant du dispositif de protection selon l'invention (la lame 4 est située à l'avant du dispositif), pour être solidarisé à chaque lame 4 à 10 de protection sur toute la hauteur de la lame 4 à 10 de protection correspondante. Les longerons latéraux peuvent, comme le longeron central, avoir une hauteur s'élargissant de l'arrière vers l'avant mais pas nécessairement dans les mêmes proportions que pour le longeron central. La hauteur des longerons latéraux peut également ne pas s'élargir de l'arrière vers l'avant.

De préférence, les lames 4 à 10 sont soudées de part et d'autre du longeron central 1.

La lame 4 située la plus en avant du dispositif présente deux retours 4a, 4b destinés à venir en appui sur la structure d'une cabine de conducteur non représentée.

La lame 4 est soudée au longeron central et aux longerons latéraux 2 et 3 par soudure en bout. Les retours 4a, 4b dépassent légèrement des longerons 2 et 3 latéraux, de manière à réaliser une soudure des deux côtés des longerons 2 et 3.

Les lames sont inclinées pour offrir une bonne visibilité au conducteur. L'inclinaison des lames est prise par rapport à la verticale lorsque le dispositif est agencé horizontalement sur un support plat, ou lorsque le dispositif est monté sur le toit d'une cabine de conducteur d'un engin de manutention.

L'inclinaison des lames peut également être définie par rapport à une lame de référence, telle que la lame 11 située à l'arrière du dispositif, et qui est disposée verticalement lorsque le dispositif est monté sur le toit d'une cabine de conducteur d'un engin de manutention.

L'inclinaison des lames 4 à 11 augmente de l'arrière vers l'avant du dispositif de protection selon l'invention.

Les longerons 1, 2 et 3 sont courbés de manière à ce que la structure extérieure du dispositif soit incurvée pour s'adapter à la forme convexe du toit de la cabine de conducteur auquel le dispositif est destiné à être fixé.

De manière similaire, chaque lame 5 à 10 dépasse légèrement du longeron latéral 2 et du longeron latéral 3 suivant la longueur de la lame. Par souci de simplification, ce dépassement n'est pas représenté sur la figure 1, toutefois, ce dépassement prend la forme de celui illustré dans la figure 2. Cependant, dans le mode de réalisation de la figure 1, les lames ne dépassent pas, en hauteur, au-delà du bord supérieur des longerons latéraux. Chaque lame est solidarisée à chacun des longerons latéraux 2 et 3 (face extérieure des longerons) par des soudures réalisées au niveau des parties respectives de la lame qui débouchent au-delà des longerons latéraux 2 et 3 (sur la face extérieure des longerons).

Des soudures sont également réalisées entre la lame et les faces intérieures des longerons latéraux 2 et 3.

Le dépassement des lames permet d'augmenter la surface de contact, et donc de soudure (solidité mécanique renforcée), entre les longerons latéraux et les lames.

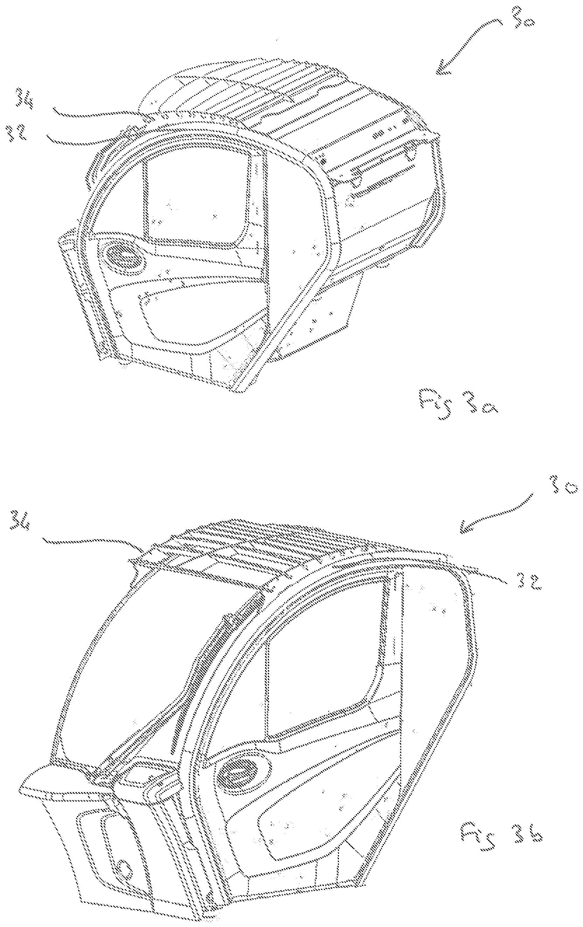

Le dispositif selon l'invention est fixé à l'avant de la cabine du conducteur (représentée dans les figures 3a et 3b) par des vis 2a, 3a et par un moyen mécanique de support coopérant avec un perçage oblong 13 du longeron central 1.

Le dispositif selon l'invention est fixé à l'arrière de la cabine du conducteur (représentée dans les figures 3a et 3b) par un élément d'appui arrière 12 reposant sur le toit de la cabine (représenté dans les figures 3a et 3b). Cet élément d'appui arrière 12 est adjacent ou à proximité de la lame arrière 11. L'élément arrière 12 est fixé au toit de la cabine par l'intermédiaire de quatre vis 12a, 12b, 12c, 12d.

Les lames 4 à 11 présentent chacune de préférence une structure s'élargissant vers la partie centrale de la lame et présentent leur plus grande largeur ou hauteur au niveau de la jonction de la partie centrale de la lame (centre du dispositif) avec le longeron central 1.

Cette conformation particulière des lames 4 à 11 permet d'optimiser la répartition de matière dans la construction du dispositif selon l'invention, en fournissant une résistance mécanique optimale.

Comme représenté sur la figure 1, à l'exception des extrémités de la lame fixées aux longerons latéraux 2 et 3, le profil de la lame (vue de face de la lame) est délimité par un bord supérieur convexe et un bord inférieur concave. Les deux courbures sont différentes et la courbure inférieure est moins prononcée que la courbure supérieure.

Alternativement, le bord supérieur est convexe tandis que le bord inférieur est rectiligne.

La conformation des lames est, par exemple, comparable à une structure de faucille symétrique, avec des extrémités opposées larges (suivant la hauteur ou largeur de la lame) pour réaliser, sur toute la hauteur des longerons 2 et 3, une jonction avec ces derniers.

Chaque lame présente, à partir de chaque extrémité élargie, un rétrécissement brusque au niveau de la largeur ou hauteur de la lame, puis un élargissement, progressif ou non, jusqu'à sa jonction avec le longeron central (jonction réalisée dans la partie centrale de la lame).

La largeur des lames augmente avec l'inclinaison des lames (en direction de l'avant du dispositif) afin que chaque lame fournisse sensiblement la même résistance mécanique (même tenue aux chocs, efforts, ...), quelle que soit sont inclinaison.

L'ensemble monobloc ainsi réalisé peut être monté facilement par assemblage mécanique sur le toit de la cabine associée, généralement par vissage à la structure de la cabine associée.

En référence à la figure 2, un autre mode de réalisation de dispositif selon l'invention comporte une structure similaire à la structure du premier mode de réalisation par la présence d'au moins un longeron central 1 et des longerons latéraux 2 et 3.

Pour simplifier la fabrication du dispositif selon l'invention, ce mode de réalisation comporte des lames allongées 14 à 21 engagées et soudées sur les longerons latéraux 2 et 3 et solidarisées au longeron central 1.

Dans cette réalisation, les lames 14 à 21 dépassent légèrement, suivant leur direction longitudinale d'extension, des longerons latéraux 2 et 3 (pour augmenter la surface de soudure et donc la solidité de l'ensemble) et sont reliées au longeron central 1. Chaque lame 14 à 21 présente une conformation en profilé à hauteur variable sur toute leur longueur comme sur le mode de réalisation de la figure 1.

A la différence du mode de réalisation représenté à la figure 1, dans le mode de réalisation de la figure 2, le profil des lames suivant leur longueur est délimitée par un bord inférieur rectiligne ou droit.

Les lames 14 à 21 présentent, cependant, des largeurs ou hauteurs différentes dépendant de leur inclinaison.

Ces lames 14 à 21 de protection sont conformées pour présenter un moment quadratique dans le sens vertical sensiblement voisin ou égal à celui des autres lames 14 à 21.

Ainsi, la chute localisée d'un objet sur une lame rencontre sensiblement la même résistance mécanique dans le sens vertical, quelle que soit la lame 14 à 21 du dispositif de protection selon l'invention.

Les longerons latéraux 2 et 3 et le longeron central 1 peuvent être fixés par des moyens mécaniques 2a, 3a et 13, respectivement à la structure d'une cabine de conducteur non représentée.

Tout ce qui a été dit à propos du mode de réalisation de la figure 1 peut être repris dans le mode de réalisation de la figure 2.

Pour les deux modes de réalisation représentés, il est avantageux de dimensionner la hauteur des lames 4 à 11 ou 14 à 21 de manière à occulter l'éclairement solaire par l'arrière de la cabine, pour éviter une montée de chaleur trop importante dans la cabine et pour éviter l'éblouissement du conducteur par des reflets sur la planche ou le tableau de bord de la cabine.

L'inclinaison des lames est prédéterminée pour que la visibilité du conducteur soit uniquement masquée par la tranche des lames 4 à 11 ou 14 à 21.

Dans les deux modes de réalisation, chaque lame est essentiellement de section transversale constante. La section transversale (épaisseur) est définie perpendiculairement à la dimension longitudinale d'extension de la lame.

Selon un mode de réalisation non représenté en détail, les lames peuvent être montées sur des supports inclinables pour permettre le réglage de l'inclinaison selon la taille du conducteur.

Ce réglage d'inclinaison selon la taille du conducteur peut également être automatique dans le cas où l'inclinaison des lames est asservie à la hauteur de réglage du siège du conducteur.

L'homme du métier pourra définir sans difficulté des largeurs et des inclinaisons de lames 14 à 21 donnant satisfaction pour la mise en oeuvre de l'invention, en particulier pour que les lames de protection 14 à 21 présentent un moment quadratique dans le sens vertical sensiblement voisin ou égal à celui des autres lames de protection.

L'invention décrite en référence à deux modes de réalisation particuliers ne leur est nullement limitée, mais couvre au contraire toute modification de forme et toute variante de réalisation dans le cadre des revendications annexées.

Ainsi, au lieu d'avoir un seul longeron central 1, le dispositif selon l'invention peut également comporter plusieurs longerons centraux, de manière à contrôler le déversement en flexion des lames lors de la chute d'un objet lourd, en répondant ainsi en particulier à la deuxième norme de sécurité concernant la protection contre les chutes d'objets.

Enfin, le longeron central peut être remplacé par une autre structure, éventuellement une structure cellulaire comportant des cloisonnements, par exemple en nid d'abeille.

Selon des variantes possibles non représentées, qui s'appliquent à l'un quelconque des modes de réalisation et variantes précédent(e)s :
- le longeron central présente des encoches transversales ouvertes à leur partie supérieure et dans lesquelles les lames sont insérées ;
- le longeron central présente des encoches transversales ouvertes à leur partie supérieure et dans lesquelles les lames sont insérées, les lames possédant également des encoches ouvertes dans leur partie inférieure et destinées à coopérer avec les encoches du longeron central ;
- le longeron central est dépourvu de fentes ou d'encoches et les lames présentent chacune des encochent ouvertes dans leur partie inférieure pour s'engager sur le longeron central ;
- le longeron central est réalisé en plusieurs parties, ou tronçons, et chaque lame est solidarisée par soudage à deux parties, ou tronçons, consécutifs du longeron central.

On notera que pour les variantes précédentes, le dispositif de protection selon l'invention peut comporter un ou plusieurs longerons centraux.

Les figures 3a et 3b illustrent un exemple d'une cabine de conducteur (30) d'un engin de manutention non représenté. La figure 3a représente la cabine vue de l'arrière de l'engin de manutention et la figure 3b représente la cabine vue de l'avant de l'engin de manutention. La cabine comprend un toit (32).

Un dispositif de protection du toit contre la chute d'objets selon l'invention, tel que les dispositifs décrits dans les modes de réalisation des figures 1 et 2, est par exemple monté sur le toit (32) par l'intermédiaire des moyens décrits plus haut.

## Revendications

1. Dispositif de protection contre la chute d'objets pour protéger un toit de cabine de conducteur, le dispositif comportant une pluralité de lames (4-11, 14-21) inclinées pour offrir une bonne visibilité au conducteur, et au moins un longeron (1) central auquel chaque lame inclinée (4-11, 14-21) est solidarisée de part et d'autre dudit au moins un longeron (1) central, **caractérisé en ce que** chaque lame inclinée présente une structure qui s'élargit en direction de sa partie centrale et qui présente une largeur maximale au droit de la jonction entre ladite partie centrale et ledit au moins un longeron central.

2. Dispositif selon la revendication 1, **caractérisé par le fait que** le dispositif comporte deux longerons latéraux (2, 3) de transmission des efforts à la structure de la cabine.

3. Dispositif selon la revendication 2, **caractérisé par le fait que** chaque lame inclinée (4-11, 14-21) est solidarisée à chaque longeron latéral (2 ou 3).

4. Dispositif selon l'une quelconque des revendications 1 à 3, **caractérisé par le fait que** chaque lame inclinée (4-11, 14-21) est conformée pour présenter un moment quadratique résistant à la chute d'objets, sensiblement voisin du moment quadratique résistant à la chute d'objets des autres lames (4 à 11, 14 à 21).

5. Dispositif selon l'une quelconque des revendications 1 à 4, **caractérisé par le fait que** la hauteur de chaque lame (4-11, 14-21) est dimensionnée pour occulter la lumière solaire venant de l'arrière en direction de l'intérieur de la cabine, de manière à éviter la surchauffe de la cabine et l'éblouissement du conducteur par des reflets sur le tableau ou la planche de bord de la cabine.

6. Dispositif selon l'une quelconque des revendications 1 à 5, **caractérisé par le fait que** les lames inclinées (4-11, 14-21) sont conformées pour présenter une inclinaison réglable par le conducteur de la cabine.

7. Dispositif selon l'une quelconque des revendications 1 à 6, **caractérisé par le fait que** les lames inclinées (4-11, 14-21) sont conformées pour présenter une inclinaison asservie à la position et à la hauteur du siège du conducteur.

8. Dispositif selon l'une quelconque des revendications 1 à 7, **caractérisé par le fait que** les lames inclinées (4-11) présentent une conformation en faucille.

9. Dispositif selon l'une quelconque des revendications 1 à 8, **caractérisé par le fait que** chaque lame inclinée (14-21) est essentiellement de section constante.

10. Cabine de conducteur d'un engin de manutention comprenant un toit, **caractérisé en ce que** la cabine comprend un dispositif de protection du toit selon l'une quelconque des revendications 1 à 9.

## Patentansprüche

1. Fallschutzvorrichtung zum Schutz eines Fahrerkabinendachs, wobei die Vorrichtung umfasst: eine Mehrzahl Blätter (4 - 11, 14 - 21), die geneigt sind, um dem Fahrer eine gute Sicht zu gewähren, und mindestens einen zentralen Längsbalken (1), mit dem jedes geneigte Blatt (4 - 11, 14 - 21) beiderseits des mindestens einen zentralen Längsbalkens (1) fest verbunden ist, **dadurch gekennzeichnet, dass** jedes geneigte Blatt eine Struktur aufweist, die in Richtung hin zur Mitte breiter wird und rechts der Verbindungsstelle zwischen der Mitte und dem mindestens einen zentralen Längsbalken eine maximale Breite aufweist.

2. Vorrichtung nach Anspruch 1, **dadurch gekennzeichnet, dass** die Vorrichtung zwei seitliche Längsbalken (2, 3) aufweist, um Kräfte auf die Kabinenstruktur zu übertragen.

3. Vorrichtung nach Anspruch 2, **dadurch gekennzeichnet, dass** jedes geneigte Blatt (4 - 11, 14 - 21) mit jedem seitlichen Längsbalken (2 oder 3) fest verbunden ist.

4. Vorrichtung nach einem der Ansprüche 1 - 3, **dadurch gekennzeichnet, dass** jedes geneigte Blatt (4 - 11, 14 - 21) derart ausgebildet ist, dass es im Wesentlichen in der Nähe des fallenden Gegenständen entgegengesetzten Flächenträgheitsmoment der anderen Blätter (4 - 11, 14 - 21) ein Flächenträgheitsmoment aufweist, das fallenden Gegenständen entgegengesetzt ist.

5. Vorrichtung nach einem der Ansprüche 1 - 4, **dadurch gekennzeichnet, dass** die Höhe jedes Blatts (4 - 11, 14 - 21) derart dimensioniert ist, dass das von hinten auf das Kabineninnere gerichtete Sonnenlicht abgeschirmt wird, um so eine Überhitzung der Kabine und eine Blendung des Fahrers durch Reflexionen auf dem Armaturenbrett der Kabine zu vermeiden.

6. Vorrichtung nach einem der Ansprüche 1 - 5, **dadurch gekennzeichnet, dass** die geneigten Blätter (4 - 11, 14 - 21) derart ausgestaltet sind, dass sie eine vom Fahrer in der Kabine regelbare Neigung aufweisen.

7. Vorrichtung nach einem der Ansprüche 1 - 6, **dadurch gekennzeichnet, dass** die geneigten Blätter (4 - 11, 14 - 21) derart ausgestaltet sind, dass sich ihre Neigung an Lage und Höhe des Fahrersitzes anpasst.

8. Vorrichtung nach einem der Ansprüche 1 - 7, **dadurch gekennzeichnet, dass** die geneigten Blätter (4 - 11) sichelförmig ausgestaltet sind.

9. Vorrichtung nach einem der Ansprüche 1 - 8, **dadurch gekennzeichnet, dass** jedes geneigte Blatt (14 - 21) einen im Wesentlichen konstanten Querschnitt aufweist.

10. Fahrerkabine eines Gabelstaplers, umfassend ein Dach, **dadurch gekennzeichnet, dass** die Kabine eine Dachschutzvorrichtung nach einem der Ansprüche 1 - 9 umfasst.

## Claims

1. A device to protect against falling objects in order to protect a driver cab roof, the device including a plurality of slats (4-11, 14-21) tilted to offer good visibility to the driver, and at least one central stringer (1) to which each inclined slat (4-11, 14-21) is secured on either side of said at least one central stringer (1), **characterized in that** each tilted slat has a structure that widens toward its central portion and that has a maximum width in line with the junction between said central portion and said at least one central stringer.

2. The device according to claim 1, **characterized in that** the device includes two lateral stringers (2, 3) for transmitting forces to the structure of the cab.

3. The device according to claim 2, **characterized in that** each tilted slat (4-11, 14-21) is secured to each lateral stringer (2 or 3).

4. The device according to any one of claims 1 to 3, **characterized in that** each tilted slat (4-11, 14-21) is configured to have a moment of inertia resisting the fall of objects, substantially adjacent to the moment of inertia resisting the fall of objects of the other slats (4 to 11, 14 to 21).

5. The device according to any one of claims 1 to 4, **characterized by** the fact that the height of each slat (4-11, 14-21) is dimensioned to conceal the sunlight coming from behind toward the inside of the cab, so as to avoid overheating of the cab and glare for the driver by reflections on the panel or dashboard of the cab.

6. The device according to any one of claims 1 to 5, **characterized in that** the tilted slats (4-11, 14-21) are configured to have a tilt adjustable by the driver of the cab.

7. The device according to any one of claims 1 to 6, **characterized in that** the tilted slats (4-11, 14-21) are configured to have a tilt slaved to the position and the height of the driver's seat.

8. The device according to any one of claims 1 to 7, **characterized in that** the tilted slats (4-11) have a sickle configuration.

9. The device according to any one of claims 1 to 8, **characterized in that** each tilted slat (14-21) has an essentially constant section.

10. A driver's cab of a transporter comprising a roof, **characterized in that** the cab comprises a device for protecting the roof according to any one of claims 1 to 9.
